# EUROPEAN PATENT SPECIFICATION

(11) **EP 2 402 513 B1**
(45) Date of publication and mention of the grant of the patent: **12.08.2015**
(21) Application number: 11172193.2
(22) Date of filing: 30.06.2011
(51) Int. Cl.: E02F 3/96, E02F 9/20, B25J 9/16

(54) **Dual-arm engineering machine**
Zweiarmige Baumaschine
Machine de construction à double bras

(30) Priority: 02.07.2010 JP 2010152180
(43) Date of publication of application: 04.01.2012
(73) Proprietor: Hitachi Construction Machinery Co., Ltd., Bunkyo-ku, Tokyo 112-8563 (JP)
(72) Inventor: Omata, Takayuki, Ibaraki, 300-0013 (JP); Egawa, Eiji, Ibaraki, 300-0013 (JP); Ishibashi, Hideto, Ibaraki, 300-0013 (JP); Tomita, Kunitsugu, Ibaraki, 300-0013 (JP); Eguchi, Takayuki, Ibaraki, 300-0013 (JP)
(74) Representative: Beetz & Partner mbB

(56) References cited:
- EP-A1- 2 116 670
- EP-A2- 1 914 353
- WO-A1-2009/104450
- JP-A- 2003 159 683

## Description

### BACKGROUND OF THE INVENTION

### 1. Field of the Invention

The present invention relates generally to dual-arm engineering machines used to scrap and separate waste occurring during demolition work for buildings or the like. More specifically, the invention relates to a dual-arm engineering machine having two arms different from each other in size.

### 2. Description of the Related Art

There is a dual-arm engineering machine used to separate wastes such as concrete pieces, metal and the like divided by demolition work. This engineering machine includes a track body; a revolving body mounted on the track body so as to be able to revolve; a first operating arm (a main arm); and a swing device. The first operating arm is composed of a multi-jointed arm attached to the revolving body so as to be able to be laid and raised and a working device mounted to the leading end of this arm to hold one member of an object to be demolished. The swing device is swingably installed in front of the revolving body and on a side opposite the first operating arm in a left-right direction with a cab put therebetween. The swing device includes a turning device and a second operating arm (a sub-arm). The turning device is installed turnably around an anteroposterior axis of the revolving operating arm is composed of a multi-jointed arm mounted to the turning device so as to be able to be laid and raised and a working device installed at the leading end of this arm to grip the other member of the object to be demolished. (See e.g. JP-2009-293230-A.)

The dual-arm engineering machine mentioned above can perform operation in which the main and sub-arms of the dual-arm engineering machine grip a rigid body to cooperatively work for bending the rigid body, for example.

When the dual-arm engineering machine executes such cooperative work, a work force occurring on the main arm side is applied to the sub-arm. However, as long as the operating area of the main arm is within the operating area of the sub-arm, a safety valve for the hydraulic cylinder which allows each joint of the sub-arm to operate is actuated even if a significant operating force occurring on the main arm side is applied to the sub-arm, thereby allowing the hydraulic cylinder of each joint of the sub-arm to be extended and contracted in such a form as to follow the work force of the main arm. Thus, the sub-arm structure can be protected. However, if the operating area of the main arm may exceed that of the sub-arm, the work force of the main arm is applied to the sub-arm in excess of a range where the hydraulic cylinder of each joint of the sub-arm can be extended and contracted. Therefore, the work force of the main arm may damage the sub-arm structure.

The conventional dual-arm engineering machine is operated such that, for protection of the sub-arm structure, the operating area of a main arm is adapted for that of the sub-arm while being sacrificed daringly.

As described above, the operating area of the main arm is limited to an area smaller than the operating area of an operating arm of an ordinary hydraulic excavator. Therefore, there is a problem in that workability of the conventional dual-arm engineering machine deteriorates with respect to operation performed by only the main arm, such as operation of transporting and loading waste, operation of pulling waste, or the like.

Besides the above, EP 23116670 A1 discloses a dual arm hydraulic excavator having two front work devices. This machine is capable of suppressing a reduction in stability due to an increase in engine power required to operate each of two front work devices by controllably reducing operating speeds of the arms of the two work devices.

### SUMMARY OF THE INVENTION

The present invention has been made in view of the situations described above and it is an object of the present invention to provide a dual-arm engineering machine that can protect a sub-arm structure by limiting the operating area of a main arm during cooperative work between the main arm and a sub-arm, and can extend the operating area of the main arm during the operation using only the main arm.

The above object is achieved by the features of claim 1 of the present application.

According to an aspect of the present invention, there is provided a dual-arm engineering machine including: a track body; a revolving body mounted on the track body so as to be revolve; a main arm including .a first boom mounted at a front portion of the revolving body so as to be able to be laid and raised, a first arm installed at a leading end of the first boom so as to be turnable by an arm cylinder, and a first working device installed at a leading end of the cylinder, and a first working device installed at a leading end of the first arm; a sub-arm including a swing portion swingably installed on the left side of the front portion of the revolving body, a second boom mounted to the swing portion so as to be able to be laid and raised, a second arm installed at a leading end of the second boom, and a second working device installed at a leading end of the second arm; arm cylinder drive means for driving the arm cylinder; sub-arm position and operating condition detecting means for detecting position and operating condition of the sub-arm; and a control unit adapted to receive a detection signal from the sub-arm position and operating condition detecting means and output a control command to limit the stroke of the arm cylinder, to the arm cylinder drive means when a determination is made, based on the detection signal, that the main arm and the sub-arm are performing cooperative work.

Preferably, the sub-arm position and operating condition detecting means is retraction position detecting means for detecting a retraction position of the second boom.

Preferably, the sub-arm position and operating condition detecting means is gripping-state detecting means for detecting a gripping state of the second working device.

Preferably, the dual-arm engineering machine further includes an arm angle sensor for detecting a relative angle of the first arm to the first boom; and the control unit is adapted to receive an arm angle signal detected by the arm angle sensor and a detection signal of the retraction position detecting means or of the gripping-state detecting means and outputs a control command to the arm cylinder drive means so that the arm angle signal may not exceed a predetermined limit angle.

Preferably, the control unit includes a signal converting section adapted to convert an arm angle signal detected by the arm angle sensor to an arithmetic signal, a limit angle setting section adapted to switch a limit value of an arm angle depending on whether the work is the cooperative work between the main arm and the sub-arm or an individual work of only the main arm, a comparison operating section adapted to perform comparison operation between the arithmetic signal resulting from the conversion in the signal converting section and a limit value signal from the limit angle setting portion and output a predetermined control signal in accordance with a result of the comparison operation, and a drive control section adapted to output a predetermined control signal to the arm cylinder drive means on the basis of the control signal from the comparison operating section.

Preferably, the control unit sets an angle of a joint portion of the main arm during cooperative work to a limit value of an arm angle, the limit value corresponding to an operating area of the sub-arm, when a determination is made, based on a detection signal from the retraction position detecting means, that the second boom is not at a retraction position or when a determination is made, based on a detection signal from the gripping state detecting means, that the second working device is gripping an object.

Preferably, the control unit sets an angle of a joint portion of the main arm during individual work of the main arm to a limit value of an arm angle, the limit value corresponding to a mechanical limit angle of the arm, when a determination is made, based on a detection signal from the retraction position detecting means, that the second boom is at a retraction position and when a determination is made, based on a detection signal from the gripping-state detecting means, that the second working device is not gripping an object.

According to the aspect of the present invention, the hydraulic circuit for the arm cylinder, which operates the arm of the main arm is provided with the operating area limiting circuit adapted to detect the posture or condition of the sub-arm and make it possible to change the limit value of the angle (the angle between the arm and the boom) of the joint portion of the main arm. Therefore, during the cooperative work between the main arm and the sub-arm, the angle of the joint portion of the main arm can be limited to limit the operating area of the main arm. Thus, the sub-arm structure can be protected. During the work using only the main arm, the limit value of the angle of the joint portion of the main arm is increased to extend the operating area of the main arm. Therefore, the operating area equal to that of the ordinary hydraulic excavator can be ensured to improve workability.

### BRIEF DESCRIPTION OF THE DRAWINGS

Fig. 1 is a perspective view illustrating an embodiment of a dual-arm engineering machine according to the present invention.
Fig. 2 is a diagram illustrating a hydraulic drive circuit for an arm cylinder constituting part of the embodiment of the dual-arm engineering machine according to the present invention.
Fig. 3 is a block diagram illustrating a control unit constituting part of the embodiment of the dual-arm engineering machine according to the present invention.
Fig. 4 is a lateral view illustrating an operating area of an arm during cooperative work between a main arm and a sub-arm in the embodiment of the dual-arm engineering machine according to the present invention.
Fig. 5 is a lateral view illustrating an operating area of the arm during individual work of the main arm in the embodiment of the dual-arm engineering machine according to the present invention.

### DESCRIPTION OF THE PREFERRED EMBODIMENTS

Preferred embodiments of a dual-arm engineering machine according to the present invention will hereinafter be described with reference to the drawings.

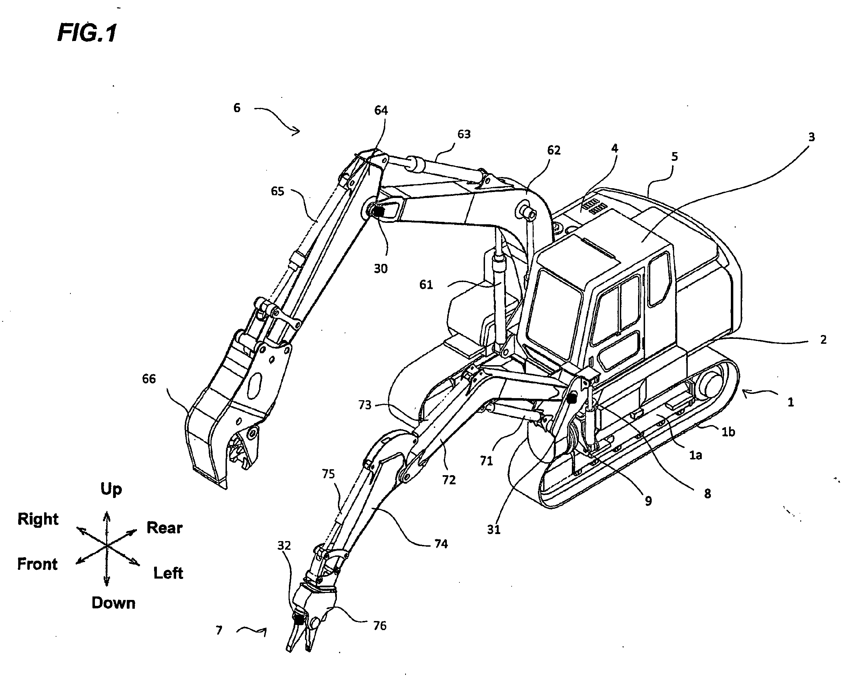

Figs. 1 to 4 illustrate an embodiment of a dual-arm engineering machine according to the present invention.

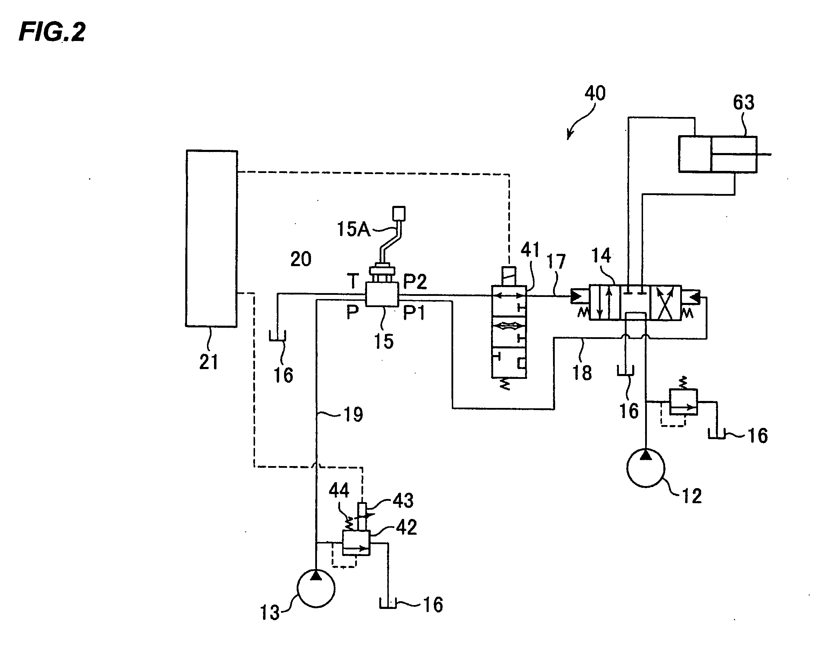

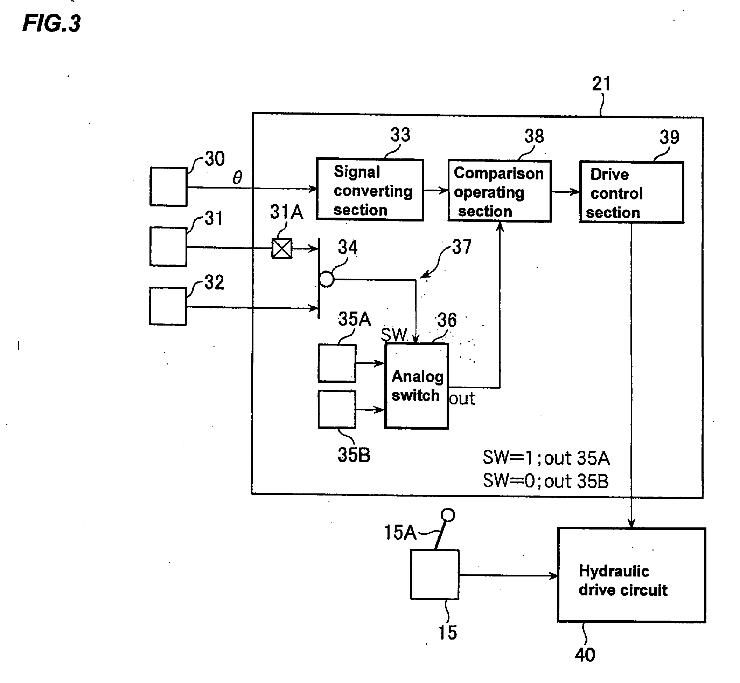

Fig. 1 is a perspective view illustrating the embodiment of the dual-arm engineering machine according to the present invention. Fig. 2 is a diagram illustrating a hydraulic drive circuit for an arm cylinder constituting part of the embodiment of the dual-arm engineering machine according to the present invention. Fig. 3 is a block diagram illustrating a control unit constituting part of the embodiment of the dual-arm engineering machine according to the present invention.

Referring to Fig. 1, the dual-arm engineering machine according to the embodiment of the present invention includes a track body 1 composed of a track body frame 1a and tracked-crawlers 1b installed on the respective lateral portions of the track body frame 1a; and a revolving body 2 mounted on the track body 1 so as to be revolve. A cab 3 is mounted on the front left side of the revolving body 2. A power source device 4 including an engine and a hydraulic pump and a counter weight 5 are installed rearward of the revolving body 2.

A main arm 6 is installed on the front central portion of the revolving body 2 and a sub-arm 7 on the front left side of the revolving body 2.

A configuration of the main arm 6 is first described with reference to Fig. 1. The main arm 6 includes a boom 62, an arm 64 and a first working device 66 and is formed as a multi-jointed working arm. The boom 62 is mounted on the front right side of the revolving body 2 so as to be able to be laid and raised (to be moved upward and downward) by a boom cylinder 61. The arm 64 is mounted to the leading end of the boom 62 so as to be turnable (to be movable upward and downward) by an arm cylinder 63. The first working device 66 is mounted at the leading end of the arm 64 so as to be turnable (to be movable upward and downward) by a cylinder 65. In this way, the first working device 66 mounted to the leading end of the main arm 6 can be shifted upward and downward. Incidentally, the arm cylinder 63 is installed on the rear side of the boom 62. Therefore, when a piston rod of the arm cylinder 63 is elongated, a relative angle of the arm 64 to the boom 62 is reduced. When the piston rod is contracted, the relative angle of the arm 64 to the boom 62 is increased.

An arm angle sensor 30 is installed in the vicinity of a joint portion between the boom 62 and the arm 64. The arm angle sensor 30 is adapted to detect a relative angle θ of the arm 64 to the boom 62.

The main arm 6 is used to grip and transfer a waste, to grip and fixedly hold a member (waste) in which the other member is buried during work of separating (shearing away) the other member in the wastes, or to divide a scraped concrete wall into small pieces.

A configuration of the sub-arm 7 portion is next described with reference to Fig. 1. A swing device 8 and a turning device 9 are installed at the base portion of the sub-arm 7. The swing device 8 is installed on a front left side of the revolving body 2 and swung in a left-right direction. The turning device 9 is installed on the front side of the swing device 8 and turned around an anteroposterior-directional axis.

The base portion of the sub-arm 7 is installed on the turning device 9. The sub-arm 7 includes a boom 72, an arm 74 and a second working device 76 and is formed as a multi-jointed working arm. The boom 72 is installed on the front side of the turning device 9 so as to be turnable by a cylinder 71. The arm 74 is installed at the leading end of the boom 72 so as to be turnable by a cylinder 73. The second working device 76 is installed at the leading end of the arm 74 so as to be turnable (movable upward and downward) by a cylinder 73.

In this way, the boom 72, arm 74 and second working device 76 of the sub-arm 7 can each be swung around a vertical axis by the swing device 8 and turned around an anteroposterior-directional axis by the turning device 9.

A sub-arm retraction limit switch 31 is installed in the vicinity of the joint portion between the boom 72 and the turning device 9 and serves as retraction position detecting means for detecting that the boom 72 is raised at a predetermined angle and disposed at a retraction position. A sub-arm working-device limit switch 32 is installed at a working-claw root portion of the second working device 76 and serves as gripping-state detecting means for detecting that the second working-device is gripping an object.

The sub-arm 7 is used, for example, to separate a member buried in a waste during work of separating (shearing away) the member, or to grip a concrete wall remaining upright.

As described above, the main arm 6 is provided with the arm angle sensor 30 adapted to detect the relative angle θ of the arm 64 to the boom 62. In addition, the sub-arm 7 is provided with the sub-arm retraction limit switch 31 and the sub-arm working-device limit switch 32. These sensor 30 and limit switches 31, 32 are electrically connected to a control unit 21 so as to send thereto an angle signal and state signals thus detected.

A hydraulic drive circuit for the arm cylinder 63, which is provided with an operating area limiting circuit is next described with reference to Fig. 2. The operating area limiting circuit is adapted to limit the contraction of the piston rod of the arm cylinder 63 to limit an angle (between the arm and the boom) of the joint portion of the main arm 6 described above. In Fig. 2, the same reference numerals as in Fig. 1 denote like portions; therefore, their detailed descriptions are omitted.

The hydraulic drive circuit as arm cylinder drive means illustrated in Fig. 2 includes a hydraulic pump 12 and pilot pump 13 both driven by a prime mover not illustrated; a control valve 14 adapted to control the flow of hydraulic operating oil supplied from the hydraulic pump 12 to the arm cylinder 63; an arm pilot valve 15 adapted to operate the arm cylinder 63; and a tank 16 storing return oil therein. Incidentally, control valves for the cylinders 61, 65 and the like are omitted in illustration.

The arm pilot valve 15 includes an inlet port P connected to the pilot pump 13 via a pump hydraulic line 19; a tank port T connected to a tank 16 via a tank hydraulic line 20; and first and second ports P1 and P2 capable of communication with the inlet port P.

The hydraulic oil delivered from the pilot pump 13 is supplied to the control valve 14 via the first port P1 or the second port P2 in response to an instruction signal from a control lever 15A used to operate the arm pilot valve 15, and via a solenoid proportional valve 41.

The control valve 14 is provided with pilot chambers on each left and right sides. A left pilot chamber of the control valve 14 and the second port P2 of the arm pilot valve 15 are connected to each other through a pilot hydraulic line 17 via the solenoid proportional valve 41. The right pilot chamber of the control valve 14 and the first port P1 of the arm pilot valve 15 are connected to each other through a pilot hydraulic line 18.

The solenoid proportional valve 41 adapted to close the pilot hydraulic line 17 in response to a control signal from the control unit 21 is installed in the pilot hydraulic line 17. The solenoid proportional valve 41 is provided with a port connected to the tank 16. A relief valve 42 adapted to set the delivery pressure of the pilot pump 13 is installed in the pump hydraulic line 19.

The relief valve 42 is provided with e.g. a solenoid 43 that makes it possible to reduce the set pressure of the relief valve 42 to a level lower than a predetermined pressure in response to a control signal from the control unit 21. In the normal times, the set pressure of the relief valve 42 is set to such a level as to be able to sufficiently drive the spool of the control valve 14 by being biased by both the solenoid 43 and a spring 44.

The solenoid proportional valve 41 is operated in proportion to a current value of a control signal outputted from a drive control section 39 of the control unit 21. The solenoid proportional valve 41 normally receives a current with the maximum level to fully open the pilot hydraulic line 17. Upon receipt of a current as a control signal whose current value is the minimum level, the solenoid proportional valve 41 blocks the hydraulic fluid of the pilot hydraulic line 17 and returns it to the tank 16. Upon receipt of a current as a control signal whose current value is between the maximum level and the minimum level, the solenoid proportional valve 41 reduces the hydraulic fluid of the pilot hydraulic line 17 to reduce the pilot pressure.

The control unit 21 is configured as illustrated in e.g. Fig. 3. The control unit 21 includes a signal converting section 33, a limit angle setting section 37, a comparison operating section 38, and a drive control section 39. The signal converting section 33 coverts, to an arithmetic signal, a relative angle signal θ for the arm 64 to the boom 62 detected by the arm angle sensor 30 described above. The limit angle setting section 37 is provided with an analog switch 36. This analog switch 36 switches a limit value of the angle of the joint portion of the main arm, which is a relative angle of the arm 64 to the boom 62, depending on whether the work is the cooperative work between the main arm and the sub-arm or the individual work of only the main arm. The comparison operating section 38 performs comparison operation between the arithmetic signal converted by the signal converting section 33 and the limit value from the limit angle setting section 37 and outputs a predetermined control signal according to such a result. The drive control section 39 outputs a predetermined control signal to the hydraulic drive circuit 40 on the basis of the control signal from the comparison operating section 38.

The limit angle setting section 37 includes a logical negation computing unit 31A, a logical addition computing unit 34, and an analog switch 36. The logical negation computing unit 31A receives a signal indicating that the boom 72 is disposed at the retraction position, which is detected by the sub-arm retraction limit switch 31 described above, and outputs a logical negation signal. The logical addition computing unit 34 computes logical addition as below. When receiving any signal 1 of an input signal indicating that the second working device 76 is gripping an object, which is detected by the sub-arm working device limit switch 32, and an output signal of the logical negation computing unit 31A, the logical addition computing unit 34 outputs signal 1. When the analog switch 36 receives a switching signal from the logical addition computing unit 34, which is 1, it outputs a signal by a first signal generator 35A. In addition, when the switching signal is 0, the analog switch 36 outputs a signal by a second signal generator 35B. The first signal generator 35A sets a limit value signal of the angle of the joint portion of the main arm during the cooperative work. The second signal generator 35B sets a limit value signal of the angle of the joint portion of the main arm during the individual work of the main arm.

In other words, the limit angle by the limit angle setting section 37 is as below. When one of the conditions that the sub-arm is not at the retraction position and that the sub-arm is gripping an object is satisfied, the angle of the joint portion of the main arm during the cooperative work is set to a limit value of the arm angle. The limit value corresponds to the operating area of the sub-arm.

On the other hand, when both the conditions that the sub-arm is at the retraction position and that the sub-arm is not gripping an object are satisfied, the angle of the joint portion of main arm during the individual work of the main arm is set to a limit value of the arm angle. The limit value corresponds to the mechanical limit angle of the arm.

The limited value signal set by the first signal generator 35A is used to determine the operating area of the main arm during the cooperative work between the main arm and the sub-arm. In addition, the limited value signal is set at e.g. 90 degrees as the limit value of the arm angle of the main arm. The limit value corresponds to the operating area of the sub-arm. The limit value signal set by the second signal generator 35B is used to determine the operating area of the main arm during the individual work of the main arm. In addition, the limit value signal is set to e.g. 160 degrees as a mechanical limit angle of the arm 62. As a result, during the cooperative work between the main arm and the sub-arm, the operating area of the main arm is limited to protect a sub-arm structure. In addition, during the work using only the main arm, the operating area of the main arm can be broadened.

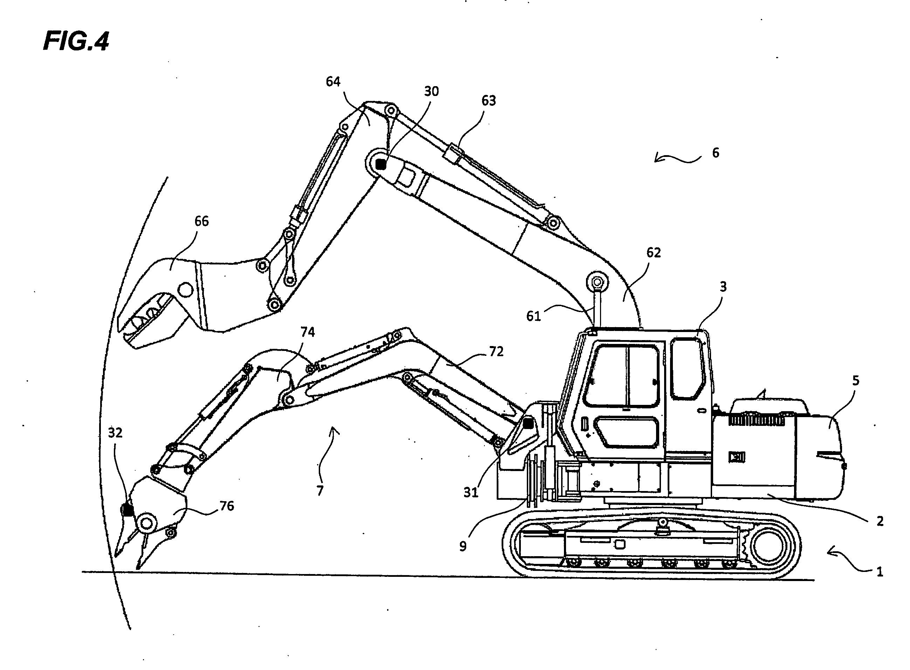

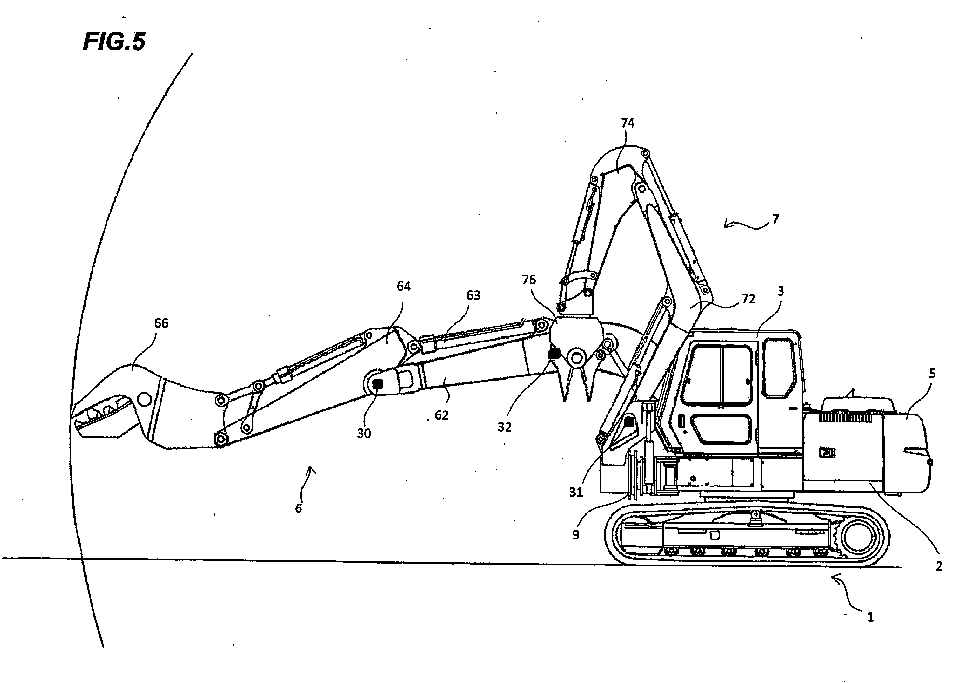

The operation according to one embodiment of the dual-arm engineering machine of the present invention described above is next described with reference to Figs. 4 and 5. Fig. 4 is a lateral view illustrating an operating area of the arm during the cooperative work between the main arm and the sub-arm in the embodiment of the dual-arm engineering machine according to the present invention. Fig. 5 is a lateral view illustrating an operating area of the arm during the individual work of the main arm in the embodiment of the dual-arm engineering machine according to the present invention. In the Figs. 4 and 5, the same reference numerals as in Figs. 1 to 3 denote like portions. Therefore, their detailed descriptions are omitted.

A description is first given of the operation during the cooperative work between the main arm and the sub-arm. As illustrated in Fig. 4, the boom 72 of the sub-arm 7 is not in the state where it is raised at a predetermined angle to be disposed at the retraction position. Therefore, an input angle from the sub-arm retraction limit switch 31 is 0. In addition, since the second working device 76 is in the state where it does not grip an object, an input signal from the sub-arm working device limit switch 32 is 0. As a result, the output of the logical negation computing unit 31A of the control unit 21 illustrated in Fig. 3 is 1 and also the output of the logical addition computing unit 34 is 1. Therefore, the limit angle setting section 37 selects e.g. 90 degrees which is a limit value signal of the first signal generator 35A and outputs it to the comparison operating section 38. On the other hand, an angle signal θ from the arm angle sensor 30 which detects a relative angle of the arm 64 to the boom 62 of the main arm 6 is converted to an arithmetic signal by the signal converting section 33. The comparison operating section 38 compares the converted angle signal θ with 90 degrees which is the output signal of the limited angle setting section 37. In this way, the arm cylinder 63 which is an actuator of the arm 64 is controlled so that the angle signal θ may not exceed 90 degrees which is the limit angle.

When a difference between the angle single θ and the 90 degrees which is a limit angle is large, the drive control unit 39 applies a current with the maximum level to the solenoid proportional valve 41. This allows the solenoid proportional valve 41 to fully open the pilot hydraulic line 17 as illustrated in Fig. 2. Thus, the arm cylinder 63 performs the ordinary action according to the operating amount of the corresponding control lever 15A.

When the arm control lever 15A is operated in a direction to the arm extension side, the hydraulic fluid delivered from the pilot pump 13 is supplied from the second port P2 of the arm pilot valve 15 to the left pilot chamber of the control valve 14 via the pilot hydraulic line 17 and the solenoid proportional valve 41. In this way, the control valve 14 starts action. When the control valve 14 is switched from the neutral position to the left position, the hydraulic fluid of the hydraulic pump 12 is supplied to the rod side of the arm cylinder 63 via the control valve 14 to contract the arm cylinder 63 to elongate the arm 64.

When the arm control lever 15A is operated in a direction to the arm-bending side, i.e., reversely to the above, the hydraulic fluid delivered from the pilot pump 13 is supplied from the first port P1 of the arm pilot valve 15 to the right pilot chamber of the control valve 14 through the pilot line 18. In this way, the control valve 14 starts action. When the control valve 14 is switched from the neutral position to the right position, the hydraulic fluid of the hydraulic pump 12 is supplied to the bottom side of the arm cylinder 63 via the control valve 14 to elongate the arm cylinder 63 to bend the arm 64.

On the other hand, when a difference between the angle signal θ and 90 degrees which a limit angle is small, on the basis of the control signal from the comparison operating section 38, the drive control section 39 outputs as a control signal a current whose current value is at an intermediate level, to the hydraulic drive circuit 40. In addition, the solenoid proportional valve 41 reduces the hydraulic fluid of the pilot hydraulic line 17 to reduce the pilot pressure. Further, with a current with the minimum level, the solenoid proportional valve 41 blocks the hydraulic fluid of the pilot hydraulic line 17 and returns it to the tank 16. In this way, the decelerating and stopping actions of the arm cylinder 63 are performed to limit the arm angle to 90 degrees.

Further, when the arm angle is 90 degrees, the solenoid 43 is operated in response to the control signal from the control unit 21 as illustrated in Fig. 2. This gradually reduces the set pressure of the relief valve 42 installed on the delivery side of the pilot pump 13 to a pressure equal to the tank pressure. As a result, the control valve 14 and the like are returned to the neutral state regardless of the operation of the control lever 15A. Therefore, the arm cylinder 63 is stopped so that the arm angle will not exceed 90 degrees.

A description is next given of the operation during the individual work of the main arm. As illustrated in Fig. 5, the boom 72 of the sub-arm 7 is in the state of being raised at a predetermined angle to be disposed at the retraction position. Therefore, an input signal from the sub-arm retraction limit switch 31 is 1. When the second working device 76 is in the state of not gripping an object, an input signal from the sub-arm working device limit switch 32 is 0. As a result, the output of the logical negation computing unit 31A of the control unit 21 illustrated in Fig. 3 is 0. In addition, also the output of the logical addition computing unit 34 is 0. Therefore, the limit angle setting section 37 selects e.g. 160 degrees which is a limit value signal of the second signal generator 35B and outputs it to the comparison operating section 38. On the other hand, the angle signal θ from the arm angle sensor 30 detecting a relative angle of the arm 64 to the boom 62 of the main arm 6 is converted to an arithmetic signal by the signal converting section 33. The comparison operating section 38 compares the converted angle signal θ with 160 degrees which is an output signal of the limit angle setting portion 37. In this way, the arm cylinder 63 which is the actuator of the arm 64 is controlled so that the angle signal θ may not exceed 160 degrees which is the limit angle.

The specific operation during the individual work of the main arm is different from that during the cooperative work between the main arm and the sub-arm described above in that only the limit angle is changed from 90 degrees to 160 degrees.

The embodiment of the dual-arm engineering vehicle according to the present invention is as below. The hydraulic circuit of the arm cylinder 63 operating the arm 62 of the main arm 6 is provided with the operating area limit circuit. The operating area limit circuit detects the posture or state of the sub-arm 7 and makes it possible to change the limit value of the joint portion angle (the angle between the arm and the boom) of the main arm. During the cooperative work between the main arm and the sub-arm, the angle of the joint portion of the main arm is limited to limit the operating area of the main arm, thus, allowing for protection of the sub-arm structure. In addition, during the work using only the main arm, the limit value of the angle of the joint portion of the main arm is increased to increase the angle of the joint portion of the main arm. Therefore, the operating area of the main arm is extended. Thus, the operating area equal to that of the ordinary hydraulic excavator can be ensured to improve workability.

Additionally, the embodiment of the dual-arm engineering machine according to the present invention described above is as below. When the boom 72 of the sub-arm is raised at a predetermined angle to be disposed at the retraction position and when the second working device 76 is not gripping an object, the operating area of the main arm can be made expandable. Therefore, even in the state where the operating area of the main arm is extended, no load is applied to the sub-arm. Therefore, the stability of the entire vehicle body can be ensured.

Incidentally, the above-embodiment is described taking as an example the case where the operating area limiting circuit which block the hydraulic fluid supplied to the hydraulic cylinder limits the angle (the angle formed between the arm and the boom) of the joint portion of the main arm. However, the present invention is not limited to this. For example, a limit may be put on an operating signal to increase the arm angle, of the operating signals on the main arm side.

The embodiment described above takes, by way of example, the state where the boom 72 of the sub-arm is raised at the predetermined angle to be disposed at the retraction position as a condition of increasing the limit value of the angle of the joint portion of the main arm. However, the present invention is not limited to this. For example, a condition may be acceptable that the sub-arm assumes any posture in which "the stability of the vehicle body is sufficiently kept."

The above-embodiment is described taking as an example the case where the sub-arm retraction limit switch 31 is provided to detect that the boom 72 is raised at a predetermined angle to be disposed at the retraction position. However, the present invention is not limited to this. For example, an angle sensor may be installed to detect, from a detected angle signal, that the boom is disposed at the retraction position.

The above-embodiment is described taking as an example the case where the sub-arm working device limit switch 32 is installed to detect that the second working device 76 is gripping an object. However, the present invention is not limited to this. For example, a pressure sensor which detects the cylinder pressure of the cylinder 75 may be installed to detect, from a detected pressure signal, that the second working device 76 is gripping an object.

## Claims

1. A dual-arm engineering machine comprising:
a track body (1);
a revolving body (2) mounted on the track body so as to be revolvable;
a main arm (6) including a first boom (62) mounted at a front portion of the revolving body so as to be able to be lowered and raised, a first arm (65) installed at a leading end of the first boom so as to be turnable by an arm cylinder, and a first working device (66) installed at a leading end of the first arm;
a sub-arm (7) including a swing portion (8) swingably installed at the revolving body, preferably on the left side of the front portion of the revolving body, a second boom (72) mounted to the swing portion so as to be able to be lowered and raised, a second arm (74) installed at a leading end of the second boom, and a second working device (76) installed at a leading end of the second arm;
arm cylinder drive means (40) for driving the arm cylinder; and
sub-arm position and operating condition detecting means (31, 32) for detecting position and operating condition of the sub-arm;
a control unit (21) adapted to receive a detection signal from the sub-arm position and operating condition detecting means **characterised in that** the control unit is further adapted to output a control command to limit the stroke of the arm cylinder, to the arm cylinder drive means when a determination is made, based on the detection signal, that the main arm and the sub-arm are performing cooperative work.

2. The dual-arm engineering machine according to claim 1,
wherein the sub-arm position and operating condition detecting means comprises retraction position detecting means (31) for detecting a retraction position of the second boom.

3. The dual-arm engineering machine according to claim 1,
wherein the sub-arm position and operating condition detecting means comprises gripping-state detecting means (32) for detecting a gripping state of the second working device.

4. The dual-arm engineering machine according to claim 2 or 3, further comprising:
an arm angle sensor (30) for detecting a relative angle of the first arm to the first boom; and
wherein the control unit is adapted to receive an arm angle signal detected by the arm angle sensor and a detection signal of the retraction position detecting means or of the gripping-state detecting means and outputs a control command to the arm cylinder drive means so that the arm angle signal may not exceed a predetermined limit angle.

5. The dual-arm engineering machine according to claim 4,
wherein the control unit includes: a signal converting section (33) adapted to convert the arm angle signal detected by the arm angle sensor to an arithmetic signal; a limit angle setting section (37) adapted to switch a limit value of an arm angle depending on whether the work is the cooperative work between the main arm and the sub-arm or an individual work of only the main arm; a comparison operating section (38) adapted to perform comparison operation between the arithmetic signal resulting from the conversion in the signal converting section and a limit value signal from the limit angle setting portion and output a predetermined control signal in accordance with a result of the comparison operation; and a drive control section (39) adapted to output a predetermined control signal to the arm cylinder drive means on the basis of the control signal from the comparison operation section.

6. The dual-arm engineering machine according to claim 4 or 5,
wherein the control unit sets an angle of a joint portion of the main arm during cooperative work to a limit value of an arm angle, the limit value corresponding to an operating area of the sub-arm, when a determination is made, based on a detection signal from the retraction position detecting means, that the second boom is not at a retraction position or when a determination is made, based on a detection signal from the gripping-state detecting means, that the second working device is gripping an object.

7. The dual-arm engineering machine according to claim 4 or 5,
wherein the control unit sets an angle of a joint portion of the main arm during individual work of the main arm to a limit value of an arm angle, the limit value corresponding to a mechanical limit angle of the arm, when a determination is made, based on a detection signal from the retraction position detecting means, that the second boom is at a retraction position and when a determination is made, based on a detection signal from the gripping-state detecting means, that the second working device is not gripping an object.

## Patentansprüche

1. Zweiarmige Baumaschine, die umfasst:
einen Gleiskettenkörper (1);
einen Drehkörper (2), der so auf dem Gleiskettenkörper montiert ist, dass er drehbar ist;
einen Hauptarm (6), der einen ersten Ausleger (62), der in einem Vorderbereich des Drehkörpers so montiert ist, dass er gesenkt und gehoben werden kann, einen ersten Arm (65), der so an dem vorderen Ende des ersten Auslegers installiert ist, dass er durch einen Armzylinder drehbar ist, und eine erste Arbeitsvorrichtung (66) einschließt, die am vorderen Ende des ersten Arms installiert ist, umfasst;
einen Unterarm (7), der ein Schwenkteil (9), das schwenkbar an dem Drehkörper, vorzugsweise auf der linken Seite des Vorderbereichs des Drehkörpers, installiert ist, einen zweiten Ausleger (72), der so an dem Schwenkteil montiert ist, dass er gesenkt und gehoben werden kann, einen zweiten Arm (74), der an dem vorderen Ende des zweiten Auslegers installiert ist, und einen zweite Arbeitsvorrichtung (76) einschließt, die an dem vorderen Ende des zweiten Arms installiert ist;
eine Armzylinderantriebseinrichtung (40) für das Antreiben des Armzylinders; und
eine Unterarmpositions- und Betriebszustandserkennungseinrichtung (31, 32) für das Erkennen der Position und des Betriebszustands des Unterarms;
eine Steuerungseinheit (21), die daran angepasst ist, ein Erkennungssignal von der Unterarmpositions- und Betriebszustandseinrichtung zu empfangen, **dadurch gekennzeichnet, dass** die Steuerungseinheit weiterhin daran angepasst ist, einen Steuerungsbefehl für die Begrenzung des Hubs des Armzylinders an die Armzylinderantriebseinrichtung abzugeben, wenn basierend auf dem Erkennungssignal ermittelt wird, dass der Hauptarm und der Unterarm eine kooperative Arbeit verrichten.

2. Zweiarmige Baumaschine nach Anspruch 1,
wobei die Unterarmpositions- und Betriebszustandserkennungseinrichtung eine Einzugspositionserkennungseinrichtung (31) für das Erkennen einer Einzugsposition des zweiten Auslegers umfasst.

3. Zweiarmige Baumaschine nach Anspruch 1,
wobei die Unterarmpositions- und Betriebszustandserkennungseinrichtung eine Greifzustandserkennungseinrichtung (32) für das Erkennen eines Greifzustands der zweiten Arbeitsvorrichtung umfasst.

4. Zweiarmige Baumaschine nach Anspruch 2 oder 3, die weiterhin umfasst:
einen Armwinkelsensor (30) für das Erkennen eines relativen Winkels des ersten Arms zu dem ersten Ausleger; und
wobei die Steuerungseinheit daran angepasst ist, ein Armwinkelsignal, das von dem Armwinkelsensor gemessen wurde, und ein Erkennungssignal der Einzugspositionserkennungseinrichtung oder der Greifzustandserkennungseinrichtung zu empfangen und sie einen solchen Steuerungsbefehl an die Armzylinderantriebseinrichtung ausgibt, dass das Armwinkelsignal einen vorgegebenen Grenzwinkel nicht übersteigen kann.

5. Zweiarmige Baumaschine nach Anspruch 4 wobei die Steuerungseinheit einschließt: einen Signalumwandlungsabschnitt (3), der daran angepasst ist, das Armwinkelsignal, das von dem Armwinkelsensor gemessen wird, in ein arithmetisches Signal umzuwandeln; einen Grenzwinkeleinstellungsabschnitt (37), der daran angepasst ist, einen Grenzwert eines Armwinkels in Abhängigkeit davon, ob die Arbeit die kooperierende Arbeit zwischen dem Hauptarm und dem Nebenarm oder eine einzelne Arbeit nur des Hauptarmes ist, einzuschalten; einen Vergleichsvorgangsabschnitt (38), der daran angepasst ist, einen Vergleichsvorgang zwischen dem arithmetischen Signal, das aus der Umwandlung in dem Signalumwandlungsabschnitt hervorgeht, und einem Grenzwertsignal von dem Grenzwerteinstellungsabschnitt durchzuführen und ein vorgegebenes Steuerungssignal gemäß dem Ergebnis des Vergleichsvorgangs auszugeben; und einen Antriebssteuerungsabschnitt (39), der daran angepasst ist, ein vorgegebenes Steuerungssignal an die Armzylinderantriebseinrichtung auf der Basis des Steuerungssignals von dem Vergleichsvorgangsabschnitt auszugeben.

6. Zweiarmige Baumaschine nach Anspruch 4 oder 5,
wobei die Steuerungseinheit einen Winkel eines Gelenkbereichs des Hauptarmes während der kooperativen Arbeit auf einen Grenzwert eines Armwinkels einstellt, wobei der Grenzwert einem Betriebsgebiet des Unterarmes entspricht, wenn eine Bestimmung durchgeführt wird, basierend auf einem Erkennungssignal der Einzugspositionserkennungseinrichtung, dass sich der zweite Ausleger nicht in einer Einzugsposition befindet, oder wenn eine Bestimmung durchgeführt wird, basierend auf einem Erkennungssignal der Greifzustandserkennungseinrichtung, dass die zweite Arbeitsvorrichtung ein Objekt ergreift.

7. Zweiarmige Baumaschine nach Anspruch 4 oder 5,
wobei die Steuerungseinheit einen Winkel eines Gelenkbereichs des Hauptarms während einer Einzelarbeit des Hauptarmes auf einen Grenzwert eines Armwinkels einstellt, wobei der Grenzwert einem mechanischen Grenzwinkel des Armes entspricht, wenn eine Bestimmung durchgeführt wird, basierend auf einem Erkennungssignal der Einzugspositionserkennungseinrichtung, dass der zweite Ausleger in einer Einzugsposition ist, und wenn eine Bestimmung durchgeführt wird basierend auf einem Erkennungssignal der Greifzustandserkennungseinrichtung, das die zweite Arbeitsvorrichtung kein Objekt ergreift.

## Revendications

1. Machine de construction à double-bras comprenant :
un corps à chenilles (1) ;
un corps rotatif (2) monté sur le corps à chenilles de façon à pouvoir être tourné ;
un bras principal (6) incluant une première flèche (62) montée sur la partie avant du corps rotatif de façon à pouvoir être abaissé et relevé, un premier bras (65) installé à une extrémité avant de la première flèche de façon à pouvoir être tourné par un vérin de bras, et un premier appareil de travail (66) installé à une extrémité avant du premier bras ;
un bras secondaire (7) comprenant une partie pivotante (8) installé de façon à pouvoir pivoter sur le corps rotatif, de préférence sur le côté gauche de la partie avant du corps rotatif, une deuxième flèche (72) montée sur la partie pivotante de façon à pouvoir être abaissée et relevée, un deuxième bras (74) installé à une extrémité avant de la deuxième flèche, et un deuxième appareil de travail (76) installé à une extrémité avant du deuxième bras ;
un moyen d'entraînement du vérin de bras (40) destiné à entraîner le vérin de bras ; et
un moyen de détection de la position et de l'état de fonctionnement du bras secondaire (31, 32) destiné à détecter la position et l'état de fonctionnement du bras secondaire ;
une unité de contrôle (21) conçue pour recevoir un signal de détection provenant du moyen de détection de la position et de l'état de fonctionnement du bras secondaire, **caractérisée en ce que** l'unité de contrôle est également conçue pour émettre une commande de contrôle permettant de limiter la course du vérin de bras destinée au moyen d'entraînement du vérin de bras lorsqu'il est déterminé, sur la base du signal de détection, que le bras principal et le bras secondaire travaillent conjointement.

2. Machine de construction à double-bras selon la revendication 1,
dans laquelle le moyen de détection de la position et de l'état de fonctionnement du bras secondaire comprend un moyen de détection de la position de rétraction (31) destiné à détecter une position de rétraction de la deuxième flèche.

3. Machine de construction à double-bras selon la revendication 1,
dans laquelle le moyen de détection de la position et de l'état de fonctionnement du bras secondaire comprend un moyen de détection de l'état de serrage (32) destiné à détecter un état de serrage du deuxième appareil de travail.

4. Machine de construction à double-bras selon les revendications 2 ou 3, comprenant également :
un capteur d'angle de bras (30) destiné à détecter un angle relatif du premier bras par rapport à la première flèche ; et
dans lequel l'unité de contrôle est conçue pour recevoir un signal d'angle de bras détecté par le capteur d'angle de bras, et un signal de détection provenant du moyen de détection de la position de rétraction ou du moyen de détection de l'état de serrage, et émettre une commande de contrôle destinée au moyen d'entraînement du vérin de bras de façon à ce que le signal d'angle de bras ne dépasse pas un angle limite prédéterminé.

5. Machine de construction à double-bras selon la revendication 4,
dans laquelle l'unité de contrôle comprend : une partie de conversion du signal (33) conçue pour convertir le signal d'angle de bras détecté par le capteur d'angle de bras en un signal arithmétique ; une partie de détermination de l'angle limite (37) conçue pour activer une valeur limite d'un angle de bras selon que le travail est un travail conjoint entre le bras principal et le bras secondaire, ou un travail individuel du seul bras principal ; une partie d'opération de comparaison (38) conçue de façon à établir une comparaison entre le signal arithmétique résultant de la conversion dans la partie de conversion du signal et un signal de valeur limite provenant de la partie de détermination de l'angle limite, et à émettre un signal de contrôle prédéterminé conformément à un résultat de l'opération de comparaison ; et une partie de contrôle de l'entraînement (39) conçue pour émettre un signal de contrôle prédéterminé vers le moyen d'entraînement du vérin de bras sur la base du signal de contrôle provenant de la partie d'opération de comparaison.

6. Machine de construction à double-bras selon les revendications 4 ou 5,
dans laquelle l'unité de contrôle détermine un angle d'une portion de jonction du bras principal pendant un travail conjoint pour fixer une valeur limite d'un angle de bras, la valeur limite correspondant à une zone de fonctionnement du bras secondaire, lorsqu'il est déterminé, sur la base d'un signal de détection provenant du moyen de détection de la position de rétraction, que la seconde flèche n'est pas dans une position de rétraction, ou lorsqu'il est déterminé, sur la base d'un signal de détection provenant du moyen de détection de l'état de serrage, que le deuxième appareil de travail est en train de serrer un objet.

7. Machine de construction à double-bras selon les revendications 4 ou 5,
dans laquelle l'unité de contrôle détermine un angle d'une partie de jonction du bras principal pendant un travail individuel du bras principal pour fixer une valeur limite d'un angle de bras, la valeur limite correspondant à un angle limite mécanique du bras, lorsqu'il est déterminé, sur la base du signal de détection provenant du moyen de détection de la position de rétraction, que la seconde flèche est dans une position de rétraction, et lorsqu'il est déterminé, sur la base du signal de détection provenant du moyen de détection de l'état de serrage, selon laquelle le deuxième appareil de travail n'est pas en train de serrer un objet.
